# FASCICULE DE BREVET EUROPEEN

(11) **EP 0 403 340 B1**
(45) Date de publication et mention de la délivrance du brevet: **31.01.1996**
(21) Numéro de dépôt: 90401571.6
(22) Date de dépôt: 08.06.1990
(51) Int. Cl.: H01S 3/23, H01S 3/30

(54) **Laser de puissance à haut rendement à structure MOPA**
Hochleistungs-MOPA-Laser
High power MOPA laser

(30) Priorité: 13.06.1989 FR 8907785
(43) Date de publication de la demande: 19.12.1990
(73) Titulaire: THOMSON-CSF, F-75008 Paris (FR)
(72) Inventeur: Ayral, Jean-Luc, F-92045 Paris la Défense (FR); Huignard, Jean-Pierre, F-92045 Paris la Défense (FR)
(74) Mandataire: Guérin, Michel

(56) Documents cités:
- EP-A- 0 292 353
- WO-A-87/05751
- OPTICS LETTERS, vol. 14, no. 1, 1 janvier 1989, pages 81-83, Optical Society of America; W.R. CHRISTIAN et al.: "Energy transfer between injection-locked single-mode diode lasers by two-beam coupling in BaTiO3"
- OPTICAL ENGINEERING, vol. 24, no. 4, juillet/août 1985, pages 586-592, Society of Photo-Optical Instrumentation Engineers; J.P. HUIGNARD et al.: "Wave mixing in photorefractive bismuth silicon oxide crystals and its applications"

## Description

### Laser MOPA impulsionnel de puissance à structure MOPA avec milieu non linéaire de transfert d'énergie.

La présente demande de brevet concerne une nouvelle configuration de laser de puissance, permettant de délivrer un faisceau de grande qualité spatiale avec un rendement optimum d'extraction de l'énergie. Elle s'applique plus particulièrement aux lasers solides déclenchés.

Les applications de ce type de laser sont notamment à trouver dans le domaine de la télémétrie et du guidage de missile par laser. Elles imposent par exemple de réaliser des impulsions courtes (10⁻⁸s) à un taux de répétition de quelques dizaines de Hz. La quantité importante d'énergie nécessaire par impulsion, de 100 à 300 mJ par exemple, nécessite de développer des puissances crêtes fortes, de l'ordre de 10 MW dans l'exemple choisi.

Les lasers solides (YAG; RUBY; GSGG) déclenchés connus sont utilisés dans les systèmes intégrant les fonctions de télémétrie ou d'illumination de cible. Les lasers actuels sont essentiellement des oscillateurs compacts, pompés par flash, à déclenchement par cavité résonnante (Q switch). Le Q switch est par exemple sous forme d'un cristal électrooptique à deux états ; lors du basculement du cristal il se produit une impulsion géante résultant de l'accumulation d'énergie dans la cavité résonnante entre deux basculements.

Il est important de pouvoir augmenter l'énergie de sortie de ces lasers, ainsi que de diminuer leur divergence, qui est actuellement loin de la limite de diffraction. Une des raisons est bien sûr d'augmenter la portée de ces systèmes.

Or, les performances de ces oscillateurs pompés par flash sont limitées, et donc le sont d'autant plus que leur puissance moyenne augmente, à cause des contraintes d'origine thermique induites dans le barreau laser. Ces contraintes thermiques sont dues au fait qu'une partie importante de l'énergie délivrée par le(s) flash(s) est dissipée en chaleur dans le barreau. Cela se traduit, d'une part par l'apparition d'une lentille thermique dans la cavité, qui induit des distorsions de phase difficiles à corriger en régime de montée en puissance du laser, et d'autre part par l'induction d'une biréfringence qui dépolarise le faisceau et donc conduit à une diminution de l'énergie extraite de la cavité par déclenchement Q switch.

Deux approches connues au moins sont possibles pour essayer de diminuer ces effets thermiques, voire de s'en affranchir :
- une première approche consiste, clairement, à diminuer la part d'énergie dissipée en chaleur dans les barreaux laser. Ceci peut-être réalisé en utilisant un pompage résonnant par diode laser de puissance. Ainsi, dans l'article de D.S Sumida publié dans IEEE J.QE, QE - 24, N°6, Juin 1988, il est estimé que l'énergie dissipée en chaleur dans le cristal laser YAG est réduite d'un rapport 7 à 10 en utilisant des diodes plutôt que des flashs. Il faut remarquer que la charge thermique, bien que plus faible, n'est pas nulle, et donc pourra être importante si l'on augmente la cadence, par exemple. La deuxième approche apporte une solution à cette contrainte.
- la deuxième approche consiste à annuler de façon dynamique les effets des diverses aberrations. L'optique non linéaire apporte des solutions attrayantes et efficaces pour réaliser ces fonctions.

C'est dans le cadre de cette deuxième approche que se place l'invention.

Un premier mode de réalisation connu mettant en oeuvre cette seconde approche consiste à utiliser un laser de structure MOPA (Master Oscillator-Power Amplifier) (Oscillateur Maitre plus Amplificateur de Puissance) dans laquelle l'oscillateur a une énergie de sortie suffisamment faible pour que la qualité du faisceau soit excellente (du point de vue de sa divergence), et l'étage amplificateur apporte l'énergie au faisceau.

Dans ce type de structure, on rencontre toutefois l'inconvénient que la génération des aberrations, notamment d'origine thermique, est reportée dans l'étage amplificateur.

On connaît des moyens de réduire très fortement ces aberrations, par compensation, comme décrit dans le document de brevet PCT 87/05751 au nom de HUGHES Aircraft Company. Ce document décrit un laser de type MOPA, dans lequel l'étage amplificateur comprend un miroir conjugué disposé sur le trajet optique de sortie de l'amplificateur laser du MOPA, qui réfléchit le rayon laser et provoque un second passage dans l'amplificateur laser. Lors du second passage, c'est un rayonnement en phase conjuguée qui traverse l'étage, de façon à réaliser une compensation des aberrations. Le système décrit comporte en outre des moyens de retard optique interdisant le recouvrement des impulsions laser du premier et du second passages dans l'amplificateur laser.

La présente invention concerne une structure laser de type MOPA, fonctionnant selon un principe différent du système HUGHES.

Plus précisément, l'objectif de l'invention est de fournir une configuration de laser de puissance à haut rendement et grande qualité spatiale, sans transfert des aberrations introduites par l'étage amplificateur de puissance. Il s'agit d'amplifier sans distorsion le faisceau de l'oscillateur du MOPA, en évitant de recourir à des éléments spécifiques de compensation d'aberrations.

Selon l'invention, cet objectif est atteint à l'aide d'une structure d'émission d'un signal laser impulsionnel de puissance selon la revendication 1, du type comprenant d'une part un étage oscillateur à faisceau de sortie à faible niveau, et d'autre part un étage amplificateur de puissance, l'étage amplificateur de puissance étant constitué par un amplificateur laser producteur d'un faisceau pompe, coopérant avec des moyens distincts de transfert d'énergie sans transfert de phase depuis ledit faisceau pompe vers ledit faisceau à faible niveau issu de l'oscillateur.

De cette manière, les caractéristiques temporelles et spatiales parfaitement maîtrisées du faisceau issu de l'oscillateur, sont conservées au cours de l'amplification sans distorsion réalisée dans les moyens distincts de transfert d'énergie. En effet, du fait que le transfert d'énergie s'effectue sans transfert de la structure de phase du faisceau pompe vers le signal à amplifier, le faisceau en sortie du laser, après cette amplification, possède les propriétés temporelles et spatiales du faisceau en sortie de l'oscillateur.

Avantageusement, lesdits moyens de transfert d'énergie sont constitués par un moyen non linéaire, constitué soit par un matériau photoréfractif (par exemple BaTiO₃, ou SBN) soit par un milieu de mise en oeuvre du processus de la Diffusion Brillouin Stimulée.

Dans le cas où le milieu non linéaire est constitué par un matériau photoréfractif, ledit faisceau pompe et ledit faisceau à faible niveau issu de l'oscillateur présentent un angle relatif d'incidence faible en entrée dudit matériau photoréfractif, compris entre environ 5° et environ 30°.

Dans le cas de la Diffusion Brillouin Stimulée, ledit milieu Brillouin de transfert d'énergie coopère avec des moyens de réaliser le décalage en fréquence du faisceau à faible niveau issu de l'oscillateur par rapport au faisceau pompe, au moyen d'un élément optique de même milieu Brillouin que lesdits moyens de transfert d'énergie. Cesdits moyens de décalage sont avantageusement constitués par une fibre optique multimode à coeur creux rempli du matériau dudit milieu Brillouin de transfert d'énergie, la fibre étant associée à des moyens de retard optique.

Quoiqu'il en soit, lesdits moyens Brillouin de transfert d'énergie coopèrent préférentiellement avec des moyens réfléchissants sélectifs assurant l'admission sélective dans lesdits moyens de transfert d'énergie, dudit faisceau issu de l'oscillateur et décalé en fréquence, et/ou dudit faisceau pompe.

Selon une autre caractérisque de l'invention, et quelque soit la nature des moyens de transfert d'énergie, ledit amplificateur laser est avantageusement monté de façon à être alimenté par une fraction du faisceau à faible niveau issu de l'oscillateur. Préférentiellement, ledit amplificateur laser coopère avec des moyens de renvoi du faisceau en au moins un second passage dans ledit étage d'amplification. Lesdits moyens de renvoi de faisceau sont avantageusement constitués par un pseudo miroir à conjugaison de phase, et coopèrent avec une ligne à retard optique, assurant un non recouvrement des impulsions aller-retour dans ledit laser amplificateur.

Avantageusement, ledit amplificateur laser coopère avec des moyens réfléchissants sélectifs, placés dans l'axe dudit amplificateur laser, et assurant sélectivement d'une part l'admission, dans ledit amplificateur laser, de ladite fraction de faisceau à faible niveau issu de l'oscillateur, et d'autre part le renvoi, en direction des moyens de transfert d'énergie, du faisceau pompe issu dudit amplificateur laser.

Selon l'invention, les moyens réfléchissants sélectifs coopérant avec l'amplificateur laser, de même que ceux coopérant avec les moyens de transfert d'énergie du mode de réalisation à milieu Brillouin, sont préférentiellement constitués par un élément polariseur du type d'un cube séparateur de polarisation ou d'une lame à incidence de Brewster, associé à une lame quart d'onde ou un rotateur de polarisation de type Faraday.

D'autres caractéristiques et avantages de l'invention apparaîtront à la lecture de la description suivante de modes de réalisation préférentielle de l'invention, donnés à titre illustratif et non limitatif, et des dessins annexés, dans lesquels :
- la figure 1 est un schéma de principe illustrant la configuration de la structure d'émission d'un signal de puissance selon l'invention, dans le cas d'un simple passage en amplificateur laser;
- la figure 2 représente un schéma de principe illustrant la configuration de la structure d'émission laser de l'invention dans le cas d'un double passage du faisceau de pompe dans l'amplificateur laser;
- la figure 3 schématise la configuration de la structure laser de l'invention, avec double passage du faisceau pompe et moyens de transfert d'énergie à matériau photoréfractif;
- la figure 4 représente un mode de réalisation d'une configuration de la structure laser de l'invention dans le cas d'un faisceau pompe à double passage, et d'un milieu Brillouin de transfert d'énergie.

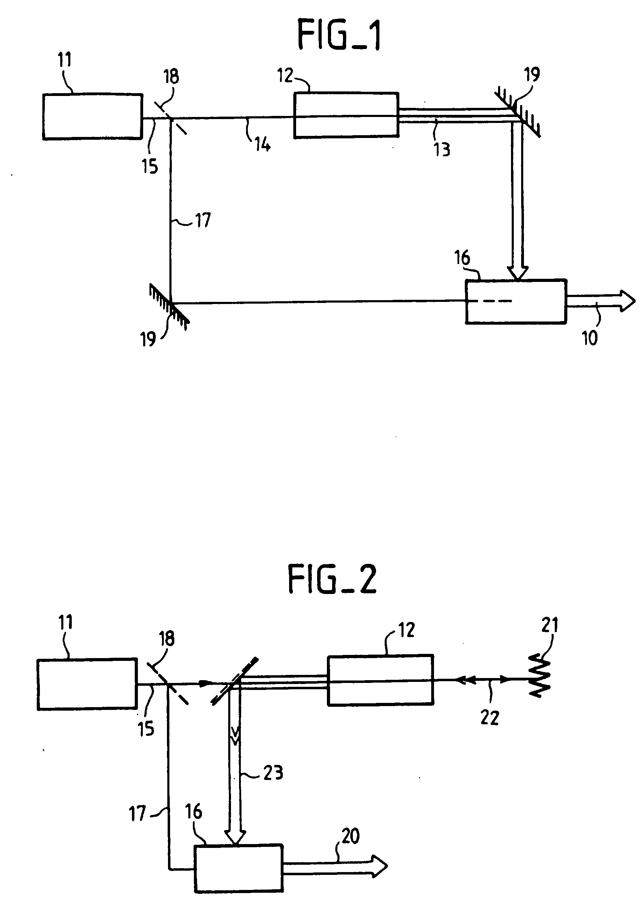

Comme représenté en figure 1, la structure d'émission d'un signal de l'invention incorpore essentiellement :
- un oscillateur laser 11, à faible énergie, fixant les caractéristiques spatio-temporelles du rayonnement laser;
- un amplificateur laser 12, assurant la génération d'un faisceau pompe 13, sans contrôle précis de la structure de phase de l'onde amplifiée. L'amplificateur laser 12 est alimenté par une fraction 14 du faisceau 15 à faible énergie issu de l'oscillateur 11;
- un milieu non linéaire 16, assurant l'amplification de la fraction restante 17 du faisceau 15 issu de l'oscillateur 11, par transfert d'énergie à partir du faisceau pompe 13 issu de l'étage amplificateur 12. Le rayonnement laser final 10 est sans distorsions.

La configuration de la figure 1 comporte en outre une lame séparatrice 18 des deux fractions 14,17 du faisceau 15 issu de l'oscillateur, ainsi que des moyens 19 d'orientation des faisceaux 13,17 dans la chaîne laser, et des moyens (non représentés) d'isolation de l'oscillateur et de l'amplificateur.

Le mode de réalisation de l'invention tel que schématisé sur la figure 2. produit le faisceau pompe 23 par double passage dans l'amplificateur laser 12. Ceci permet d'extraire davantage d'énergie du barreau laser de l'amplificateur 12. Ce double passage est obtenu à l'aide de moyens réfléchissants 21.

L'emploi d'un pseudo miroir à conjugaison de phase 21, au lieu d'un miroir conventionnel réalisé par exemple simplement à l'aide d'un réseau de coins cubes (voir l'article de CHIPMAN et al, Applied Optics, vol.27, n°15, 1 août 1988), permet avantageusement de corriger les aberrations à faibles fréquences spatiales du barreau, et assure donc d'une part une divergence maîtrisée de la pompe 22,23, et d'autre part, un autoalignement des faisceaux 22 aller et retour dans l'étage amplificateur 12 et du faisceau pompe 23 dans le milieu non linéaire 16.

Le processus de transfert d'énergie sans transfert de la phase de la pompe peut être réalisé d'au moins deux manières :
- soit par mélange à deux ondes dans un matériau photoréactif,
- soit par amplification par le processus de Diffusion Brillouin Stimulée.

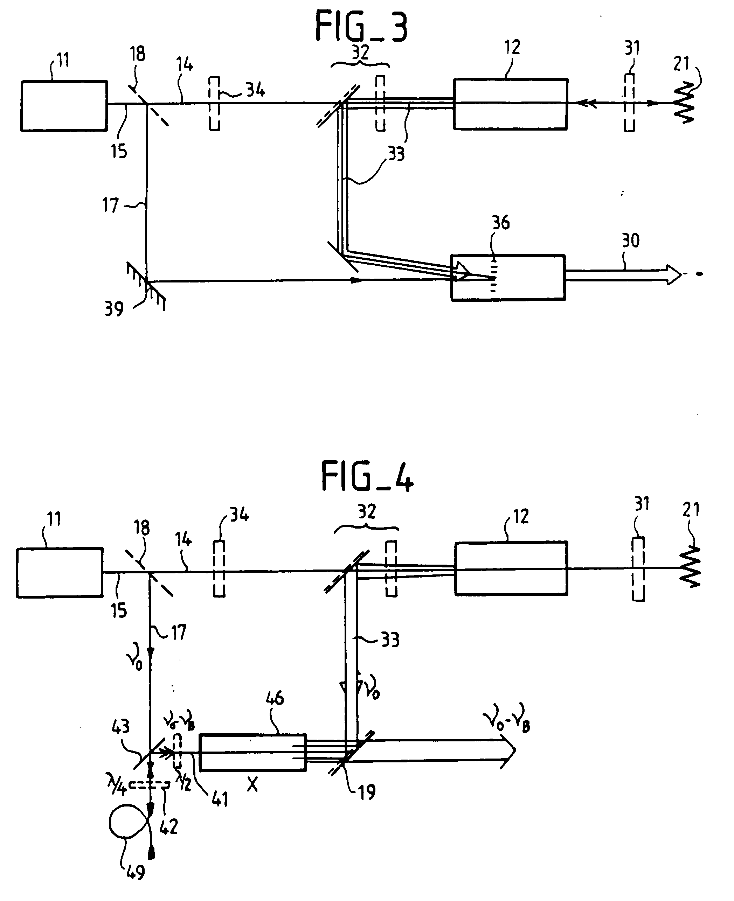

Ces deux processus sont illustrés respectivement en figures 3 et 4.

### Mélange à deux ondes dans un matériau photoréactif (figure 3)

L'oscillateur 11 délivre une énergie par impulsion ou une puissance continue telle que ses propriétés spatiales, temporelles et fréquentielles soient parfaitement maîtrisées et non limitées par les phénomènes thermiques décrits antérieurement. Il s'agit par exemple d'un laser solide pompé par diodes laser.

La lame séparatrice 18 permet de séparer le faisceau 15 issu de l'oscillateur 11 en deux bras 14,17, l'un 14 étant destiné à être amplifié en 12 pour servir de pompe, l'autre 17 destiné à servir de faisceau de référence qui sera amplifié sans distorsion en 36.

L'amplificateur 12 est un amplificateur laser, par exemple un barreau de YAG:Nd pompé par flash ou par diodes laser.

Le pseudo miroir à conjugaison de phase 21 est avantageusement constitué d'un réseau de coins cube type "catafolt".

L'élément 31 est une ligne à retard optique assurant en régime impulsionnel un non-recouvrement des impulsions aller et retour dans l'amplificateur 12, afin de garantir l'extraction d'énergie, donc le gain d'amplification optimal en double passage.

L'élément 32 permet de transmettre le faisceau 14 de l'oscillateur 11 vers l'amplificateur 12 et de réfléchir vers les moyens de transfert d'énergie 36 le faisceau retour 33 après réflexion sur les moyens réfléchissants 21. Cet élément 32 est constitué par exemple d'un élément polarisateur tel que un cube séparateur de polarisation ou une lame à incidence de Brewster, associé à une lame quart d'onde ou un rotateur de polarisation de type Faraday.

L'élément 34 est un obturateur rapide, par exemple à plasma, utilisé dans l'invention en régime impulsionnel, dont la fonction est d'éviter tout retour de faisceau 14 dans l'oscillateur 11.

Dans les moyens de transfert d'énergie 36, constitués d'un matériau photoréactif tel qu'un cristal de Titanate de Baryum (BaTiO₃) ou de Niobate de Strontium et de Baryum (SBN), a lieu l'interaction à deux ondes entre le faisceau de référence 17 à faible signal, issu directement de l'oscillateur 11 et orienté à l'aide de lames 18 et 39 (miroir), et le faisceau pompe 33 de forte intensité. Les deux faisceaux font entre eux un angle faible (de 5 à 30 °).

L'intensité relative des deux faisceaux 17 et 33 est par exemple dans un rapport 100 à 1000. Dans ce cas, l'interaction se traduit par un transfert d'énergie du faisceau pompe 33 (intense) vers le faisceau de référence 17 à faible intensité, sans transfert des aberrations de phase pouvant exister sur le faisceau pompe 33. Le principe de ce type d'interactions peut être trouvé dans les références J.P. HUIGNARD et al., Optical Engineering, July/Aug.1985, vol.24, n°4., et G. LE SAUX et al., IEEE, J.QE-23, n°10, October 1987. Le faisceau 30 ainsi amplifié possède les propriétés spatiales et spectrales de l'oscillateur 11, optimisées pour les applications ultérieures, notamment en ce qui concerne la divergence en particulier.

### Amplification par Diffusion Brillouin Stimulée (figure 4)

Les mêmes références désignent les mêmes éléments en figures 3 et 4.

L'interaction entre les deux ondes, d'une part de référence 17 et d'autre part de pompe 33 a lieu dans les moyens de transfert d'énergie 46. Le mécanisme physique est celui de la Diffusion Brillouin Stimulée. Le milieu actif peut être un gaz (CH₄, SF₆...), un liquide (CS₂, acétone, hexane,...) ou un solide tel que la silice. Les deux ondes 17,33 interagissantes sont contrapropagatives.

Pour que l'amplification du faisceau de référence à faible signal 17 ait lieu par transfert d'énergie à partir du faisceau pompe intense 33, il est nécessaire que ces deux ondes soient décalées en fréquence d'une grandeur ν_{B} caractéristique du milieu appelée "décalage Brillouin" (quelques centaines de MHz dans les gaz à environ 10 GHz dans la silice). Si cette condition est réalisée, le gain d'amplification du faisceau de référence peut être important, jusqu'à plusieurs dizaines de dB (voir ATKINS et al., Electronics Letters, 22 (10) 556 (1986)).

Il faut remarquer que le processus de Diffusion Brillouin Stimulée est efficace lorsque l'excitation de pompe est intense (de l'ordre de 100MW/cm) et/ou lorsque la longueur d'interaction entre les deux ondes est grandes. C'est pourquoi il est possible d'utiliser deux types de géométrie de cellules, soit en régime focalisé (très forte densité d'énergie), soit en régime guidé (grande longueur d'interaction). Dans les solides tels que la silice, on utilisera plutôt le régime guidé à cause des contraintes de tenue au flux optique.

L'élément 19 permet de réaliser le décalage en fréquence sur l'onde de référence. Soit ν₀ la fréquence optique du faisceau 15,17 issu de l'oscillateur. ν₀ est également la fréquence du faisceau pompe 33. Pour être amplifié dans les moyens de transfert d'énergie 46, le faisceau de référence 17 doit être à la fréquence ν₀.ν_{B}. L'élément 49 est donc constitué du même milieu que les moyens de transfert d'énergie 46 et permet de générer par Diffusion Brillouin Stimulée une onde 41 rétrodiffusée et conjuguée, possédant donc les mêmes qualités spatiales que l'onde de référence 17. On choisira pour réaliser les moyens de décalage 49 plutôt une configuration guidée favorisant de grandes longueurs d'interaction, compte-tenu de la faible puissance du faisceau 17 issue de l'oscillateur 11. Ce sera par exemple une fibre optique multimode à coeur creux remplie du même matériau (gaz ou liquide) que celui utilisé dans le milieu Brillouin 46 de transfert d'énergie.

L'orientation du faisceau de la fibre optique 49 vers les moyens de transfert d'énergie 46 s'effectue par sélection de polarisation à l'aide d'un polarisateur 43 et d'une lame quart d'onde 42.

On notera que le principe de l'invention est conservé si on utilise une amplification du faisceau pompe à l'aide d'un nombre de passages supérieur à 2 dans le barreau laser de l'amplificateur laser 12 plutôt que par double passage. Dans ce cas, l'extraction d'énergie du milieu laser n'en est que meilleure.

## Revendications

1. Structure d'émission d'un signal laser impulsionnel de puissance, du type comprenant d'une part un étage oscillateur à faisceau de sortie à faible niveau, et d'autre part un étage amplificateur de puissance, caractérisé en ce que l'étage amplificateur de puissance est constitué par un amplificateur laser (12) alimenté par une fraction (14) du faisceau à faible niveau issu de l'oscillateur (11) et produisant un faisceau pompe (13,23,33), coopérant avec des moyens distincts (16,36,46) de transfert d'énergie sans transfert de phase depuis ledit faisceau pompe (13,23,33) vers la fraction restante du faisceau à faible niveau (15,17) issu de l'oscillateur (11), les moyens de transfert d'énergie étant soit en matériau photoréfractif permettant un mélange de deux ondes soit un millieu non linéaire permettant une amplification par Diffusion Brillouin Stimulée.

2. Structure selon la revendication 1, caractérisée en ce que le matériau photoréfractif (36) appartient au groupe comprenant BaTiO₃ et SBN.

3. Structure selon la revendication 2, caractérisée en ce que ledit faisceau pompe (33) et ledit faisceau (17) à faible niveau issu de l'oscillateur (11) présentent un angle relatif d'incidence faible en entrée dudit matériau photoréfractif (36), compris entre environ 5° et environ 30°.

4. Structure selon la revendication 1, caractérisée en ce que ledit milieu Brillouin de transfert d'énergie (46) coopère avec des moyens (42,49) de décalage en fréquence du faisceau à faible niveau issu de l'oscillateur (11) par rapport au faisceau pompe (33), comprenant un élément optique (49) de même milieu Brillouin que lesdits moyens de transfert d'énergie (46).

5. Structure selon la revendication 4, caractérisée en ce que lesdits moyens de décalage sont constitués par une fibre optique multimode (49) à coeur creux rempli du matériau dudit milieu Brillouin de transfert d'énergie (46), ladite fibre (49) étant associée à des moyens de retard optique (42).

6. Structure selon l'une quelconque des revendications 4 ou 5, caractérisée on ce que lesdits moyens de transfert d'énergie (46) coopèrent avec des moyens réfléchissants sélectifs (43,49) assurant l'admission sélective dans lesdits moyens de transfert d'énergie, dudit faisceau (17) issu de l'oscillateur (11) et décalé en fréquence et/ou dudit faisceau pompe (33) respectivement.

7. Structure selon l'une quelconque des revendications 1 à 6 caractérisée en ce que ledit amplificateur laser (12) coopère avec des moyens (21) de renvoi du faisceau en au moins un second passage dans ledit étage d'amplification (12).

8. Structure selon la revendication 7, caractérisée en ce que lesdits moyens de renvoi de faisceau sont constitués par un pseudo-miroir à conjugaison de phase (21).

9. Structure selon l'une quelconque des revendications 7 ou 8, caractérisée en ce que lesdits moyens de renvoi (21) coopèrent avec une ligne à retard optique (31), assurant un non recouvrement des impulsions aller-retour dans ledit amplificateur laser (12).

10. Structure selon l'une quelconque des revendications 7 à 9, caractérisée en ce que ledit amplificateur laser (12) coopère avec des moyens réfléchissants sélectifs (32), placés dans l'axe dudit amplificateur laser (12), et assurant sélectivement d'une part l'admission, dans ledit amplificateur laser (12), de ladite fraction de faisceau à faible niveau (14) issu de l'oscillateur (11), et d'autre part le renvoi, en direction des moyens de transfert d'énergie (16,36,46), du faisceau pompe (33) issu dudit amplificateur laser (12).

11. Structure selon l'une quelconque des revendications 6 ou 10, caractérisée en ce que lesdits moyens réfléchissants sélectifs (32) sont constitués par un élément polariseur du type d'un cube réparateur de polarisation ou d'une lame à incidence de Brewster, associé à une lame quart d'onde ou un rotateur de polarisation de type Faraday.

12. Structure selon l'une quelconque des revendications 1 à 11, caractérisée en ce que ledit oscillateur laser (11) est un laser solide pompé par diodes laser.

13. Structure selon l'une quelconque des revendications 1 à 12, caractérisée en ce que ledit amplificateur laser (12) est un barreau de YAG:Nd, pompé par flash et/ou par diodes laser.

## Patentansprüche

1. Struktur zur Emission eines Leistungsimpuls-Lasersignals mit einerseits einer Oszillatorstufe, die einen Ausgangsstrahl niedrigen Pegels liefert, und andererseits einer Leistungsverstärkerstufe, dadurch gekennzeichnet, daß die Leistungsverstärkerstufe aus einem Laserverstärker (12) besteht, der mit einem Teilstrahl (14) des aus dem Oszillator (11) stammenden Strahls gespeist wird und einen Pumpstrahl (13, 23, 33) erzeugt sowie mit getrennten Mitteln (16, 36, 46) zum Energietransfer ohne Phasentransfer vom Pumpstrahl (13, 23, 33) zum verbleibenden Teil des aus dem Oszillator (11) kommenden Strahls mit geringem Pegel (15, 17) zusammenwirkt, wobei die Energietransfermittel entweder aus einem fotorefraktiven Material, das eine Mischung zweier Wellen erlaubt, oder aus einem nicht-linearen Milieu bestehen, das eine Verstärkung durch stimulierte Brillouin-Diffusion erlaubt.

2. Struktur nach Anspruch 1, dadurch gekennzeichnet, daß das fotorefraktive Material (36) zu der Gruppe gehört, die BaTiO₃ und Strontium-Barium-Niobat enthält.

3. Struktur nach Anspruch 2, dadurch gekennzeichnet, daß der Pumpstrahl (33) und der aus dem Oszillator (11) stammende Strahl (17) mit geringem Leistengspegel einen relativen Einfallswinkel kleinen Werts am Eingang des fotorefraktiven Materials (36) besitzen, der zwischen etwa 5 und etwa 30° liegt.

4. Struktur nach Anspruch 1, dadurch gekennzeichnet, daß das Brillouin-Energietransfermilieu (46) mit Mitteln (42, 49) zur Frequenzverschiebung des aus dem Oszillator (11) stammenden Strahls mit geringem Pegel bezüglich des Pumpstrahls (33) zusammenwirkt, wobei diese Mittel ein optisches Element (49) aus dem gleichen Brillouin-Milieu wie die Energietransfermittel (46) enthält.

5. Struktur nach Anspruch 4, dadurch gekennzeichnet, daß die Frequenzverschiebungsmittel aus einer Multimode-Lichtleitfaser (49) mit einem hohlen Kern bestehen, der mit dem Material des Brillouin-Energietransfermilieus (46) gefüllt ist, wobei diese Faser optischen Verzögerungsmitteln (42) zugeordnet ist.

6. Struktur nach einem beliebigen der Ansprüche 4 oder 5, dadurch gekennzeichnet, daß die Energietransfermittel (46) mit selektiv reflektierenden Mitteln (43, 49) zusammenwirken, die den aus dem Oszillator (11) stammenden Strahl (17) nach der Frequenzverschiebung und/oder den Pumpstrahl (43) selektiv in die Energietransfermittel einspeisen.

7. Struktur nach einem beliebigen der Ansprüche 1 bis 6, dadurch gekennzeichnet, daß der Laserverstärker (12) mit Mitteln (21) zur Umlenkung des Strahls zusammenwirkt, so daß sich mindestens ein zweiter Durchlauf durch die Verstärkungsstufe (12) ergibt.

8. Struktur nach Anspruch 7, dadurch gekennzeichnet, daß die Strahlumlenkungsmittel aus einem Pseudospiegel mit Phasenkonjunktion (21) gebildet werden.

9. Struktur nach einem beliebigen der Ansprüche 7 oder 8, dadurch gekennzeichnet, daß die Umlenkmittel (21) mit einer optischen Verzögerungsleitung (31) zusammenwirken, die verhindert, daß die Impulse, die in beiden Richtungen durch den Laserverstärker (12) laufen, sich überlappen.

10. Struktur nach einem beliebigen der Ansprüche 7 bis 9, dadurch gekennzeichnet, daß der Laserverstärker (12) mit selektiv reflektierenden Mitteln (32) zusammenwirkt, die in der Achse des Laserverstärkers (12) angeordnet sind und selektiv einerseits den Teilstrahl (14) mit geringem Pegel aus dem Oszillator (11) in den Laserverstärker (12) einspeisen und andererseits den aus dem Laserverstärker (12) kommenden Pumpstrahl (33) in Richtung der Energietransfermittel (16, 36, 46) umlenken.

11. Struktur nach einem beliebigen der Ansprüche 6 oder 10, dadurch gekennzeichnet, daß die selektiv reflektierenden Mittel (32) aus einem Polarisatorelement nach Art eines Polarisations-Separatorwürfels oder eines Plättchens mit Brewster-Einfall gebildet werden, wobei dieses Element einem Viertelwellenlängenplättchen oder einem Polarisations-Rotationsorgan vom Faraday-Typ zugeordnet ist.

12. Struktur nach einem beliebigen der Ansprüche 1 bis 11, dadurch gekennzeichnet, daß der Laseroszillator (11) ein Feststofflaser ist, der durch Laserdioden gepumpt wird.

13. Struktur nach einem beliebigen der Ansprüche 1 bis 12, dadurch gekennzeichnet, daß der Laserverstärker (12) ein YAG:Nd-Stab ist, der durch Blitzlicht und/oder Laserdioden gepumpt wird.

## Claims

1. Structure for emitting a pulsed power laser signal, of the type comprising on the one hand an oscillator stage with a low-level output beam, and on the other hand a power amplifier stage, characterized in that the power amplifier stage consists of a laser amplifier (12) supplied with a fraction (14) of the low-level beam from the oscillator (11) and producing a pump beam (13, 23, 33), cooperating with distinct means (16, 36, 46) of energy transfer without phase transfer from the said pump beam (13, 23, 33) to the remaining fraction of the low-level beam (15, 17) from the oscillator (11), the energy transfer means being either made from a photorefractive material allowing the mixing of two waves or a non-linear medium allowing amplification by Stimulated Brillouin Scattering.

2. Structure according to Claim 1, characterized in that the photorefractive material (36) belongs to the group comprising BaTiO₃ and SBN.

3. Structure according to Claim 2, characterized in that the said pump beam (33) and the said low-level beam (17) from the oscillator (11) exhibit a small relative angle of incidence on entry to the said photorefractive material (36), of between around 5° and around 30°.

4. Structure according to Claim 1, characterized in that the said energy-transfer Brillouin medium (46) cooperates with means (42, 49) for frequency-shifting the low-level beam from the oscillator (11) with respect to the pump beam (33), comprising an optical element (49) of the same Brillouin medium as the said energy transfer means (46).

5. Structure according to Claim 4, characterized in that the said shifting means consist of a multimode optical fibre (49) with hollow core filled with material of the said energy-transfer Brillouin medium (46), the said fibre (49) being associated with optical delay means (42).

6. Structure according to either one of Claims 4 or 5, characterized in that the said energy transfer means (46) cooperate with selective reflecting means (43, 49) providing for the selective admission into the said energy transfer means of the said beam (17) from the oscillator (11) and frequency-shifted and/or of the said pump beam (33) respectively.

7. Structure according to any one of Claims 1 to [lacuna], characterized in that the said laser amplifier (12) cooperates with means (21) for returning the beam in at least one second pass through the said amplification stage (12).

8. Structure according to Claim 7, characterized in that the said beam return means consist of a phase conjugation pseudo-mirror (21).

9. Structure according to either one of Claims 7 or 8, characterized in that the said return means (21) cooperate with an optical delay line (31), ensuring non-overlap of the outward-return pulses in the said laser amplifier (12).

10. Structure according to any one of Claims 7 to 9, characterized in that the said laser amplifier (12) cooperates with selective reflecting means (32), placed on the axis of the said laser amplifier (12), and selectively providing for, on the one hand the admission into the said laser amplifier (12) of the said fraction of low-level beam (14) from the oscillator (11), and on the other hand the return towards the energy transfer means (16, 36, 46) of the pump beam (33) from the said laser amplifier (12).

11. Structure according to either one of Claims 6 or 10, characterized in that the said selective reflecting means (32) consist of a polarizer element of the type of a polarization separator cube or a Brewster incidence plate, associated with a quarter-wave plate or a Faraday type polarization rotator.

12. Structure according to any one of Claims 1 to 11, characterized in that the said laser oscillator (11) is a solid-state laser pumped by laser diodes.

13. Structure according to any one of Claims 1 to 12, characterized in that the said laser amplifier (12) is a YAG:Nd rod pumped by flash and/or by laser diodes.
